# EUROPÄISCHE PATENTSCHRIFT

(11) **EP 4 114 609 B1**
(45) Veröffentlichungstag und Bekanntmachung des Hinweises auf die Patenterteilung: **03.04.2024**
(21) Anmeldenummer: 21704777.8
(22) Anmeldetag: 11.02.2021
(51) Int. Cl.: B23K 26/08, B23K 26/38, B23K 26/70, B23K 37/00, B23K 101/06

(54) **LASERBEARBEITUNGSMASCHINE ZUM BEARBEITEN VON WERKSTÜCKEN**
LASER MACHINE TOOL FOR MACHINING WORKPIECES
MACHINE-OUTIL LASER POUR L'USINAGE DE PIÈCES

(30) Priorität: 06.03.2020 DE 102020106141
(43) Veröffentlichungstag der Anmeldung: 11.01.2023
(73) Patentinhaber: TRUMPF Werkzeugmaschinen SE + Co. KG, 71254 Ditzingen (DE)
(72) Erfinder: SCHOPF, Ralf, 71254 Ditzingen (DE)
(74) Vertreter: Trumpf Patentabteilung
(86) Internationale Anmeldenummer: PCT/EP2021/053311
(87) Internationale Veröffentlichungsnummer: WO 2021/175558

(56) Entgegenhaltungen:
- EP-A1- 2 886 242
- DE-U1-202017 107 190

## Beschreibung

Die Erfindung betrifft eine Laserbearbeitungsmaschine gemäß dem Oberbegriff von Anspruch 1.

Derartige Laserbearbeitungsmaschinen dienen der laserschneidenden Bearbeitung von Werkstücken, insbesondere Rohren, mittels einer Laserbearbeitungsvorrichtung der Laserbearbeitungsmaschine. Das Laserschneiden wird in einem Arbeitsraum der Laserbearbeitungsmaschine durchgeführt, der mit einer Einhausung versehen ist. Die Einhausung dient der Abschirmung der Umgebung der Laserbearbeitungsmaschine gegen Laserstrahlung, die während eines Bearbeitungsprozesses im Inneren des Arbeitsraums an einer Bearbeitungsstelle an dem Werkstück emittiert wird.

Durch eine Einlassöffnung in der Einhausung wird ein zu bearbeitendes Werkstück in einer axialen Werkstück-Zuführrichtung in das Innere des Arbeitsraums vorgeschoben. Bearbeitete Werkstücke, die durch laserschneidende Bearbeitung im Innern des Arbeitsraums erzeugt worden sind, werden in einem Entladebereich in einer Querrichtung zu der Werkstück-Zuführrichtung verlaufenden Ausschleusrichtung aus dem Arbeitsraum ausgeschleust.

Nach einem finalen Trennschnitt gelangen die bearbeiteten Werkstücke dabei zunächst unter Schwerkraftwirkung auf eine unterhalb der Bearbeitungsstelle angeordnete Ausschleusschräge einer Ausschleusstation in dem Entladebereich. Über die Ausschleusschräge verlassen die bearbeiteten Werkstücke den Arbeitsraum auf eine in der Ausschleusrichtung gelegene Teileablage der Ausschleusstation.

Die DE 20 2017 107 190 U1 und die DE 10 2016 204 161 B4 betreffen eine Laserbearbeitungsmaschine gemäß dem Oberbegriff des Anspruches 1.

Um an der Laserbearbeitungsmaschine befindliche Personen vor den Laserstrahlen zu schützen, ist es aus diesen Laserbearbeitungsmaschinen bekannt, auch die Ausschleusstation mit einer Einhausung zu versehen. Ferner ist es bekannt, eine Endseite bzw. Stirnseite des Entladebereichs bzw. der Einhausung der Ausschleusstation mit strahldichten Sicherheitszäunen und einer oder mehreren Lichtschranken zu versehen, um in axialer Werkstück-Zuführrichtung für Strahlsicherheit und Schutz vor mechanischen Gefahren zu sorgen, wenn z.Bsp. das bearbeitete Werkstück mit einer Länge in axialer Werkstück-Zuführrichtung nicht vollständig abgeschnitten wird.

Aufgabe der Erfindung ist es, eine Laserbearbeitungsmaschine bereitzustellen, bei der eine Abschirmung von Laserstrahlen und einen Schutz vor mechanischen Gefahren in dem Entladebereich auf besonders einfache und kostengünstige Art und Weise ermöglicht wird, selbst wenn das bearbeitete Werkstück nicht vollständig abgeschnitten wird.

Die Aufgabe wird gelöst durch eine Laserbearbeitungsmaschine gemäß Anspruch 1. Vorgeschlagen wird dementsprechend eine Laserbearbeitungsmaschine zum Bearbeiten von Werkstücken, wobei die Laserbearbeitungsmaschine insbesondere vorsieht, dass der Entladebereich eine Prallvorrichtung aufweist, die der Ausschleusstation in Werkstück-Zuführrichtung nachgelagert ist, wobei die Prallvorrichtung ein Strahlschutzgehäuse mit einer Endseite und zumindest einem in Werkstück-Zuführrichtung der Endseite vorgelagerten und von der Endseite beabstandeten Prallkörper aufweist, die derart eingerichtet sind, dass der zumindest eine Prallkörper bei Aufprallen des in Werkstück-Zuführrichtung geführten Werkstückes auf den zumindest einen Prallkörper geführt zu der Endseite bewegt wird, und wobei die Prallvorrichtung zumindest eine Positionserkennungseinheit aufweist, die dazu eingerichtet ist, eine Position des zumindest einen Prallkörpers gegenüber der Endseite festzustellen.

Der Arbeitsraum kann dabei eine Einlassöffnung zum Einlassen der zu bearbeitenden Werkstücke und eine den Arbeitsraum umgebenden Einhausung aufweisen.

Ferner kann ein Beladebereich zum Beladen des Arbeitsraums mit Werkstücken vorgesehen sein, wobei der Beladebereich in einer Werkstück-Zuführrichtung des zu bearbeitenden Werkstücks der Einlassöffnung des Arbeitsraums vorgelagert ist.

Die vorgeschlagene Laserbearbeitungsmaschine ermöglicht damit eine einfache und kostengünstige Abschirmung von Laserstrahlen in dem Entladebereich und einen Schutz vor mechanischen Gefahren, in dem das Werkstück auf den zumindest einen Prallkörper aufprallt und in das Strahlschutzgehäuse eingeführt wird, wobei es den zumindest einen Prallkörper geführt zu der Endseite bewegt. Durch das Strahlschutzgehäuse hindurch können dabei keine schädlichen Strahlungen der Laserbearbeitungsvorrichtung austreten. Das Aufprallen und das geführte Bewegen des Prallkörpers kann dabei mittels der zumindest einen Positionserkennungseinheit, die die Position des Prallkörpers gegenüber der Endseite feststellt, festgestellt werden. Entsprechend kann anhand der Position des zumindest einen Prallkörpers festgestellt werden, ob das Werkstück bei einer maximalen Länge abgeschnitten wurde. Falls nicht, kann beispielsweise ein Hinweis- oder Alarmsignal ausgegeben werden, um einen Maschinenführer oder Arbeiter darüber in Kenntnis zu setzen. Dieser kann sodann entsprechende Gegenmaßnahmen einleiten, beispielsweise einen Not-Halt der Laserbearbeitungsmaschine auslösen. Alternativ kann die Laserbearbeitungsmaschine selbst dazu eingerichtet sein, einen Not-Halt auszulösen.

Die Prallvorrichtung kann insbesondere mit der Ausschleusstation verbunden sein, was aber nicht notwendig sein muss. Insbesondere kann der Entladebereich in der Werkstück-Zuführrichtung betrachtet einen Abschnitt, der sich in den Arbeitsraum erstreckt, sowie vorzugsweise einen weiteren Abschnitt, der dem Arbeitsraum nachgelagert, aufweisen. Dies kann bedeuten, dass sich der Entladebereich abschnittweise innerhalb der Umhausung des Arbeitsraums befindet und zusätzlich eine der Umhausung des Arbeitsraums in Werkstück-Zuführrichtung nachgelagerte weitere Umhausung umfassen kann.

Die Werkstücke können insbesondere Rohre sein. Der Querschnitt der Rohre oder Rohrstücke kann beliebig sein, beispielsweise rund, dreieckig, viereckig oder dergleichen sein.

Die Laserbearbeitungsmaschine kann ferner Werkstückunterstützungen in dem Beladebereich aufweisen. Vor Beginn der Bearbeitung mit der Laserbearbeitungsmaschine kann ein Werkstück mit einer in Querrichtung zur Längsrichtung des Werkstücks ausgeführten Beladebewegung auf den Werkstückunterstützungen abgelegt werden. Die Werkstückunterstützungen in dem Beladebereich können an einem Maschinenbett heb- und senkbar geführt sein. Die Ablage bzw. das Abladen der Werkstücke auf den Werkstückunterstützungen kann dabei manuell von einer Bedienerseite des Maschinenbetts her oder mittels einer Beladevorrichtung erfolgen, die an der von der Bedienerseite abliegenden Rückseite des Maschinenbetts angeordnet sein kann. Das auf den Werkstückunterstützungen abgelegte Werkstück streckt sich mit seiner Längsrichtung in einer Vorschubrichtung bzw. Werkstück-Zuführrichtung, in welcher das von den Werkstückunterstützungen unterfangene Werkstück dem, insbesondere bis auf die Einlassöffnung und die Auslassöffnung vollständig in der Einhausung eingehausten, Arbeitsraum der Laserbearbeitungsmaschine vorgelagert ist.

Ferner kann die Laserbearbeitungsmaschine eine Vorschubeinheit aufweisen. An seinem von dem Arbeitsraum der Laserbearbeitungsmaschine abliegenden Längsende wird das auf den Werkstückunterstützungen abgelegte Werkstück von der Vorschubeinheit erfasst, die dazu ausgebildet sein kann, längs des Maschinenbetts in der Werkstück-Zuführrichtung und in Gegenrichtung zu verfahren. Durch eine entsprechende Verfahrbewegung der Vorschubeinheit wird das an dieser fixierte Werkstück durch die Einlassöffnung der Einhausung des Arbeitsraums der Maschine in den Arbeitsraum eingeführt. An dem in den Arbeitsraum der Maschine eingeführten Teil des Werkstücks wird dann mittels der in dem Arbeitsraum angeordneten Laserbearbeitungsvorrichtung die gewünschte Bearbeitung durchgeführt.

Die Ausschleusstation kann eine weitere Einhausung, Ausschleusschräge und/oder eine Teileablage aufweisen. Durch die Ausschleusstation wird dann das bearbeitete Werkstück in Querrichtung zu der Werkstück-Zuführrichtung mittels der Ausschleusschräge zu der Teileablage ausgeschleust. Aus der Teileablage kann das bearbeitete und ausgeschleuste Werkstück sodann entnommen werden.

Das Strahlschutzgehäuse der Prallvorrichtung kann insbesondere mit der weiteren Einhausung der Ausschleusstation verbunden sein. Das Strahlschutzgehäuse ist insbesondere derart ausgebildet, dass keine Laserstrahlen der Laserbearbeitungsvorrichtung aus dem Strahlschutzgehäuse austreten können. Das Strahlschutzgehäuse kann aus mehreren Strahlschutzplatten, insbesondere Strahlschutzblechen, ausgebildet sein. Die Endseite kann ein in axialer Werkstück-Zuführrichtung dem Werkstück gegenüberliegendes Ende des Strahlschutzgehäuses sein oder sich in dem Strahlschutzgehäuse befinden. Die Endseite kann eine Strahlschutzplatte, insbesondere ein Strahlschutzblech, aufweisen oder durch eine solche gebildet sein.

Die Position des zumindest einen Prallkörpers gegenüber der Endseite kann beispielsweise ein kürzester Abstand des zumindest einen Prallkörpers von der Endseite oder eine Orientierung des zumindest einen Prallkörpers relativ zu der Endseite sein. Ferner kann die Position des zumindest einen Prallkörpers durch die Position eines oder mehrere Haltepunkte des zumindest einen Prallkörpers bestimmt sein.

Es kann vorgesehen sein, dass die zumindest eine Positionserkennungseinheit als ein Sicherheitsschalter ausgebildet ist oder die Prallvorrichtung zumindest einen mit der zumindest einen Positionserkennungseinheit verbundenen Sicherheitsschalter aufweist, wobei der zumindest eine Sicherheitsschalter dazu eingerichtet ist, einen Not-Halt der Laserbearbeitungsmaschine auszulösen, wenn eine vorgegebene Position des zumindest einen Prallkörpers gegenüber der Endseite festgestellt oder verlassen wird. Die vorgegebene Position ist insbesondere derart gewählt, dass ein Erreichen der vorgegebenen Position anzeigt, dass das bearbeitete Werkstück in Werkstück-Zuführrichtung eine Länge aufweist, die über eine zu schneidende bzw. trennenden Werkstücklänge hinausgeht. Dies deutet darauf hin, dass der Schneid- bzw. Trennvorgang, bei dem das bearbeitete Werkstück abgeschnitten wird, nicht erfolgreich war und das Werkstück bei weiterem Vorschub in Werkstück-Zuführrichtung auf die Endseite der Prallvorrichtung auftreffen würde. Dies könnte zu einer mechanischen Beschädigung der Laserbearbeitungsmaschine führen und wird durch das Auslösen des Not-Halts der Laserbearbeitungsmaschine verhindert. Es kann dabei vorgesehen sein, dass der Betrieb der Laserbearbeitungsmaschine beim Not-Halt vollständig unterbrochen wird oder zumindest nur der Vorschub des Werkstücks in Werkstück-Zuführrichtung unterbrochen wird. Durch den Sicherheitsschalter wird so auf automatische Art und Weise verhindert, dass eine mechanische Beschädigung der Laserbearbeitungsmaschine durch ein nicht ordnungsgemäß bzw. nicht bei vorgesehener Länge getrenntes Werkstück eintritt. Anstelle von Sicherheitsschaltern können selbst verständlich auch andere Sensoren, Näherungsschalter oder Kontaktschalter Verwendung finden, wie insbesondere kapazitive, resistive oder optoelektronische Sensoren.

Ferner kann vorgesehen sein, dass der zumindest eine Prallkörper an einem ersten Haltepunkt der Prallvorrichtung schwenkbar gelagert ist, so dass die geführte Bewegung des zumindest einen Prallkörpers zumindest eine Schwenkbewegung ist. Insbesondere ist ein erstes Ende des Prallkörpers an dem ersten Haltepunkt schwenkbar gelagert. Die Schwenkbewegung kann folglich in Werkstück-Zuführrichtung erfolgen, so dass ein zweites Ende des zumindest einen Prallkörpers zu der Endseite hin geschwenkt wird bzw. der Abstand zwischen dem Prallkörper an dessen zweiten Ende und der Endseite durch die Schwenkbewegung reduziert wird. Das erste Ende kann insbesondere dem zweiten Ende gegenüberliegen. Das erste Ende und der erste Haltepunkt können sich entgegen der Gravitationsrichtung oberhalb des zweiten Endes befinden. Dadurch ist ein eigenständiges Zurückstellen des zumindest einen Prallkörpers nach Trennen des Werkstücks und des zumindest einen Prallkörpers mittels der Schwerkraft möglich. Der erste Haltepunkt kann dann auch als oberer Haltepunkt bezeichnet werden.

Dabei kann vorgesehen sein, dass die vorgegebene Position ein Schwenkwinkel des zumindest einen Prallkörpers ist. Der Schwenkwinkel kann zwischen einer Ruhelage und einer Schwenklage des zumindest einen Prallkörpers, bei der der zumindest eine Prallkörper in Richtung zu der Endseite geschwenkt ist, gemessen werden. Die Positionserkennungseinheit oder der Sicherheitsschalter kann dabei in Form eines Winkelmessers ausgebildet sein. Der Winkelmesser kann an dem ersten Haltepunkt angeordnet oder in dem ersten Haltepunkt integriert sein. Der Winkelmesser misst den Schwenkwinkel.

Dabei kann auch vorgesehen sein, dass der erste Haltepunkt in Werkstück-Zuführrichtung verschiebbar oder lösbar geführt ist, so dass die, insbesondere geführte, Bewegung des zumindest einen Prallkörpers zumindest auch eine Verschiebebewegung oder Lösebewegung ist. Hierbei kann die Position der zumindest einen Prallplatte als Abstand des ersten Haltepunktes von der Endseite bestimmt werden. Die Positionserkennungseinheit oder der Sicherheitsschalter kann dabei in Form eines Abstandsmessers oder eines rastenden Sicherheitsschalters ausgebildet sein. Wenn der erste Haltepunkt beispielsweise zu oder an dem rastenden Sicherheitsschalter, der sich bei der vorgegebenen Position befinden kann, vorbei geschoben wird, kann der Sicherheitsschalter so auf einfache Art und Weise aktiviert werden.

Hierbei kann vorgesehen sein, dass der erste Haltepunkt dazu eingerichtet ist, in Werkstück-Zuführrichtung verschoben oder gelöst zu werden, wenn der zumindest eine Prallkörper infolge der Schwenkbewegung gegen die Endseite anschlägt. Dadurch wird eine zweistufige Auslösung ermöglicht. In der ersten Stufe wird der zumindest eine Prallkörper verschwenkt. In der zweiten Stufe wird der zumindest eine Prallkörper verschoben.

Dabei kann auch vorgesehen sein, dass die vorgegebene Position ein Abstand des ersten Haltepunkts von der Endseite ist. Insoweit kann beispielsweise auch vorgesehen sein, dass eine vorgegebenen Position als Schwenkwinkel in der ersten Stufe und eine vorgegebenen Position als Abstand in der zweiten Stufe genutzt wird. Ein Erreichen der vorgegebenen Position in der ersten Stufe kann beispielsweise bereits mit einer Warnung mittels eines Alarmsignals ausgegeben werden, während bei Erreichen der vorgegebenen Position in der zweiten Stufe der Not-Halt ausgelöst werden kann.

Auch kann hierbei vorgesehen sein, dass der zumindest eine Prallkörper an einem zweiten Haltepunkt der Prallvorrichtung anliegt, so dass die geführte Bewegung des zumindest einen Prallkörpers zumindest eine Schwenkbewegung weg von dem zweiten Haltepunkt ist. Der zweite Haltepunkt kann dabei als ein von dem Strahlschutzgehäuse abstehender Vorsprung ausgebildet sein. Der Vorsprung kann insbesondere in Richtung zu dem ersten Haltepunkt abstehen. Insbesondere der zweite Bereich des zumindest einen Prallkörpers kann an dem zweiten Haltepunkt anliegen. Somit kann sich der zweite Haltepunkt in Gravitationsrichtung unterhalb des ersten Haltepunkts befinden. Damit kann der zweite Haltepunkt auch als unterer Haltepunkt bezeichnet werden. Dann ist die Ruhelage des zumindest einen Prallkörpers erreicht, wenn der zumindest eine Prallkörper an dem zweiten Haltepunkt anliegt. Das Rückstellen wird dann durch das Anlegen des zumindest einen Prallkörpers an dem zweiten Haltepunkt beendet.

Ferner kann hierbei vorgesehen sein, dass der zumindest eine Prallkörper an dem ersten Haltepunkt und/oder dem zweiten Haltepunkt magnetisch und/oder mechanisch befestigt ist. Dies sind besonders einfache Möglichkeiten, den Prallkörper an dem jeweiligen Haltepunkt zu befestigen. Die magnetische Ausführung kann mit Permanentmagneten ausgebildet sein. Die mechanische Ausführung kann mit einem Feder-Nut-Mechanismus, einem Drehgelenk, einer Schienenführung oder dergleichen ausgebildet sein.

Weiterhin kann vorgesehen sein, dass der zumindest eine Prallkörper als eine Prallplatte, insbesondere als ein Prallblech, ausgebildet ist. Die Prallplatte bietet eine große Aufprallfläche für das Werkstück. Das Prallblech kann kostengünstig gefertigt werden, ist leicht und kann einfach angebracht werden.

Vorgesehen sein kann auch, dass die Prallvorrichtung zumindest zwei Prallkörper aufweist. Dann kann zudem je nach Auftreffen des Werkstücks auf den jeweiligen Prallkörper unterschieden werden, wo das vorgeschobene Werkstück sich in der Laserbearbeitungsmaschine befindet.

Dabei kann auch vorgesehen sein, dass die zumindest zwei Prallkörper in Querrichtung zu der Werkstück-Zuführrichtung nebeneinander angeordnet sind. Entsprechend kann ein erster Prallkörper der zumindest zwei Prallkörper im Bereich der Werkstückbearbeitung, insbesondere auf Höhe der Vorschubeinheit und/oder der Laserbearbeitungsvorrichtung, und ein zweiter Prallkörper der zumindest zwei Prallkörper im Bereich der Werkstückausschleusung, insbesondere auf Höhe der Ausschleusschräge und/oder der Teileablage, angeordnet sein.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.

Es zeigen:
- Figur 1: eine perspektivische Ansicht auf eine Laserbearbeitungsmaschine gemäß dem Stand der Technik,
- Figur 2: eine perspektivische Ansicht auf eine Ausschleusstation und Prallvorrichtung einer Laserbearbeitungsmaschine gemäß einem Ausführungsbeispiel der Erfindung,
- Figur 3: eine Detailansicht der Figur 2 mit entfernter weiterer Einhausung der Ausschleusstation,
- Figur 4: eine Schnittansicht durch die Prallvorrichtung aus Figur 2 und 3 in einer ersten Position eines Prallkörpers der Prallvorrichtung,
- Figur 5: die Schnittansicht aus Figur 4 in einer zweiten Position des Prallkörpers, und
- Figur 6: die Schnittansicht aus Figur 4 in einer dritten Position des Prallkörpers.

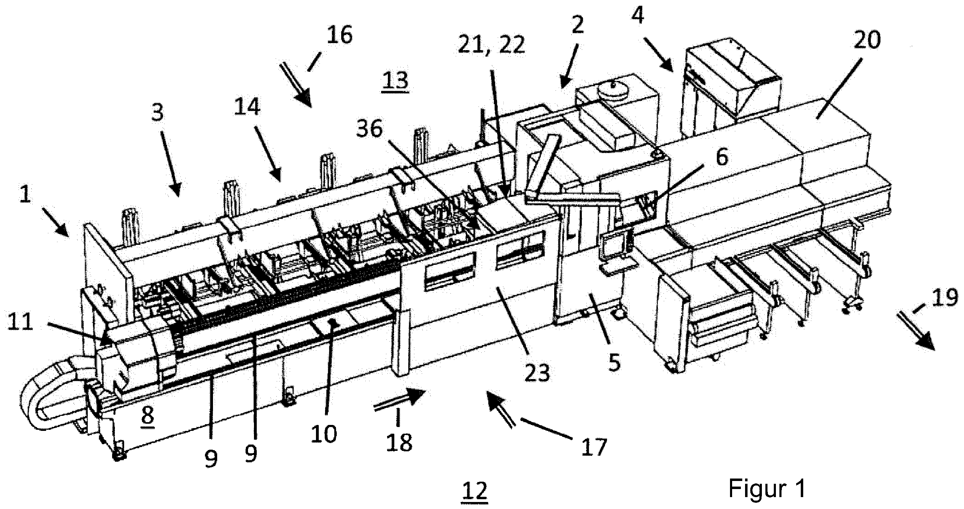

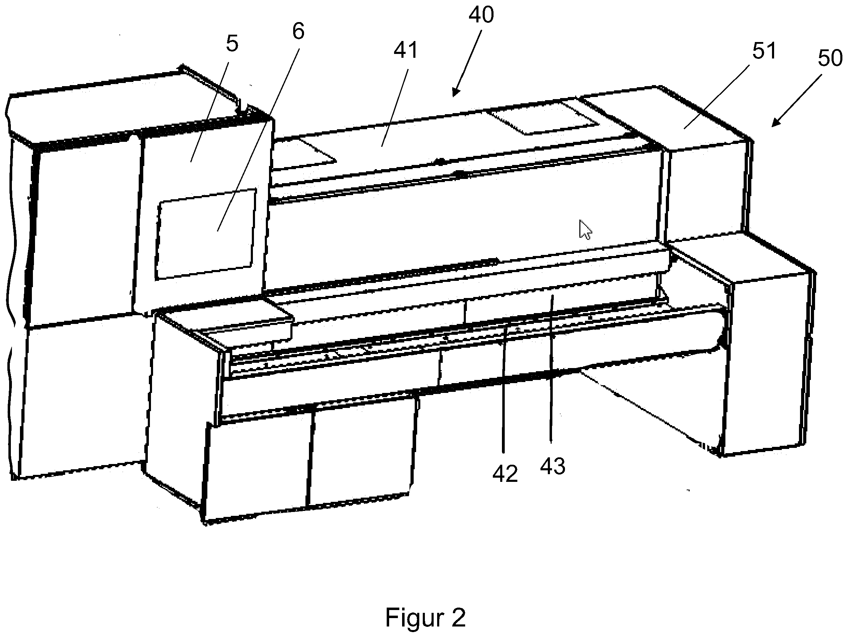

Ausweislich der Figur 1 weist eine Laserbearbeitungsmaschine 1 für die Rohrbearbeitung einen Arbeitsbereich 2, einen Beladebereich 3 sowie einen Entladebereich 4 auf. Die gezeigte Laserbearbeitungsmaschine 1 entspricht weitgehend der aus DE 20 2017 107 190 U1. Die gezeigte Laserbearbeitungsmaschine 1 unterscheidet sich von einer beispielhaften Laserbearbeitungsmaschine 1 gemäß der Erfindung aus den Figuren 2 bis 6 in ihrem Entladebereich 4. Folglich kann ein Ausführungsbeispiel einer erfindungsgemäßen Laserbearbeitungsmaschine 1 die Merkmale der Laserbearbeitungsmaschine 1 gemäß Figur 1 mit Ausnahme der Merkmale des in Figur 1 gezeigten Entladebereichs 4 aufweisen.

In dem Arbeitsbereich 2 der Laserbearbeitungsmaschine 1 befindet sich ein mit einer Einhausung 5 versehener Arbeitsraum 6. Die Einhausung 5 des Arbeitsraums 6 ist bis auf eine in dieser Ansicht durch einen Strahlschutztunnel 20 verdeckte und somit nicht gezeigte Einlassöffnung in der zu dem Beladebereich 3 hin liegenden Wand der Einhausung 5 und bis auf eine ebenfalls verdeckte Auslassöffnung in der zu dem Entladebereich 4 hin liegenden Wand der Einhausung 5 geschlossen. In dem Arbeitsraum 6 im Inneren der Einhausung 5 ist eine nicht erkennbare Laserbearbeitungsvorrichtung, in dem dargestellten Beispielsfall eine Laserschneidvorrichtung für die schneidende Bearbeitung von Werkstücken, insbesondere Rohren, angeordnet.

In dem Beladebereich 3 der Laserbearbeitungsmaschine 1 ist als Tragstruktur ein Maschinenbett 8 angeordnet, dass arbeitsraumseitig bis in die Einhausung 5 reicht. An der Oberseite des Maschinenbetts 8 sind Führungsschienen 9 montiert, die längs des Maschinenbetts 8 verlaufen. Außerdem sind an dem Maschinenbett 8 Werkstückunterstützungen 10 herkömmlicher Bauart in vertikaler Richtung heb- und senkbar geführt.

Eine Werkstück-Vorschubeinheit in Form einer Vorschubeinheit 11 ist längs des Maschinenbetts 8 verfahrbar. In bekannter Weise ist die Vorschubeinheit 11 arbeitsraumseitig mit einem Spannfutter zur Fixierung eines in dem Arbeitsraum 6 zu bearbeitenden Rohres versehen. Das Spannfutter ist um die Werkstücklängsachse drehbar.

Bei ihren Bewegungen längs des Maschinenbetts 8 ist die Vorschubeinheit 11 an den Führungsschienen 9 geführt. Als motorischer Antrieb für die Vorschubeinheit 11 ist ein Zahnstangenantrieb herkömmlicher Bauart vorgesehen mit einer an dem Maschinenbett 8 parallel zu den Führungsschienen 9 verlaufenden und der Einfachheit halber nicht dargestellten Zahnstange sowie mit einem an der Vorschubeinheit 11 vorgesehenen, motorisch angetriebenen Antriebsritzel, welches mit der Zahnstange des Zahnstangenantriebs kämmt.

An einer von einer Bedienerseite 12 des Maschinenbetts 8 abliegenden Rückseite 13 des Maschinenbetts 8 ist in dem Beladebereich 3 der Laserbearbeitungsmaschine 1 eine motorische Beladevorrichtung 14 aufgestellt. Als Beladevorrichtung 14 kommt beispielsweise eine Beladevorrichtung in Frage, wie sie von der Firma TRUMPF unter der Bezeichnung "LoadMaster Tube" vertrieben wird.

In bekannter Weise besitzt die Beladevorrichtung 14 ein Werkstückmagazin, in welchem eine größere Anzahl von zu bearbeitenden Werkstücken vorgehalten werden kann. Die Werkstücke in dem Werkstückmagazin verlaufen mit ihrer Längsrichtung parallel zu dem Maschinenbett 8. Nach der Vereinzelung eines der in dem Werkstückmagazin vorgehaltenen Werkstück wird dieses Werkstück in bekannter Weise mittels einer Transfervorrichtung an das Maschinenbett 8 übergeben und dabei auf den zu diesem Zeitpunkt ausgefahrenen Werkstückunterstützungen 10 abgelegt. Vor der Übergabe an die Werkstückunterstützungen 10 passiert das Werkstück einen nicht gezeigten optischen Detektor. Mittels des optischen Detektors, dessen Detektionsrichtung parallel zu dem Maschinenbett 8 verläuft, wird überprüft, ob das zur Übergabe an das Maschinenbett 8 vorgesehene Werkstück tatsächlich diejenige Querschnittsgeometrie aufweist, zu deren Bearbeitung die in dem Arbeitsraum 6 angeordnete Laserbearbeitungsvorrichtung zu dem betreffenden Zeitpunkt eingerichtet ist.

Ein Pfeil 16 symbolisiert die Richtung der mittels der Beladevorrichtung 14 automatisiert ausgeführten Beladebewegung, mit welcher ein zu bearbeitendes Werkstück an das Maschinenbett 8 beziehungsweise an die ausgefahrenen Werkzeugunterstützungen 10 übergeben wird.

Alternativ kann das Maschinenbett 8 manuell von der Bedienerseite 12 her mit einem zu bearbeitenden Werkstück beladen werden. Die Richtung der manuellen Beladebewegung, die gleichfalls in Werkstückquerrichtung verläuft ist durch einen Pfeil 17 angedeutet.

Das an das Maschinenbett 8 übergebene und von den ausgefahrenen Werkstückunterstützungen 10 unterfangene Werkstück wird in bekannter Weise an seinem von dem Arbeitsraum 6 abliegenden Längsende durch das Spannfutter der Vorschubeinheit 11 geklemmt. Anschließend wird das Werkstück mittels der Vorschubeinheit 11 aus seiner Ausgangsposition in einer Werkstück-Zuführrichtung 18 bewegt und dabei durch die Einlassöffnung der Einhausung 5 mit dem in der Bewegungsrichtung voreilenden Längsende in den Arbeitsraum 6 der Laserbearbeitungsmaschine 1 eingeführt. In dem Arbeitsraum 6 wird das Werkstück mittels der dort angeordneten Laserbearbeitungsvorrichtung trennend bearbeitet. Es sind Bearbeitungsfälle denkbar, in denen das Werkstück während des Bearbeitungsprozesses mittels der Vorschubeinheit 11 bewegt wird. Etwa zum Ausschneiden von Konturen an der Wand eines Werkstücks verfährt die Vorschubeinheit 11 während des Schneidprozesses in der Werkstück-Zuführrichtung 18 und in Gegenrichtung. Gleichzeitig wird das Rohr mittels des Spannfutters der Vorschubeinheit 11 um die Rohrachse gedreht.

In dem dargestellten Beispielsfall wird das Werkstück mittels der Laserschneidvorrichtung im Innern des Arbeitsraums 6 in kleinere Werkstücke zerlegt, die nach dem jeweiligen Trennprozess durch die Auslassöffnung der Einhausung 5 in Werkstücklängsrichtung aus dem Arbeitsraum 6 in den Entladebereich 4 der Laserbearbeitungsmaschine 1 vorgeschoben werden. Nach Verlassen des Arbeitsraums 6 werden die bearbeiteten Werkstück jeweils in einer Ausschleusrichtung 19 aus der Laserbearbeitungsmaschine 1 ausgeschleust. Alternativ kann auch unmittelbar nach dem Trennen ausgeschleust werden.

Der Entladebereich 4 der Laserbearbeitungsmaschine 1 ist in diesem Ausführungsbeispiel mit einer Strahlschutzhaube 20 abgedeckt. Die Strahlschutzhaube 20 schirmt die Auslassöffnung der Einhausung 5 gegen den Austritt von Laserstrahlung aus dem Arbeitsraum 6 in die für Personen zugängliche Umgebung der Laserbearbeitungsmaschine 1 ab.

Eine entsprechende Funktion an der zu dem Beladebereich 3 hin liegenden Seite des Arbeitsraums 6 übernimmt der Strahlschutztunnel 21. Der Strahlschutztunnel 21 ist der Einlassöffnung der Einhausung 5 des Arbeitsraums 6 in der Werkstück-Zuführrichtung 18 vorgelagert. Im Funktionszustand übergreift der Strahlschutztunnel 21 das Maschinenbett 8 haubenartig. Der Querschnitt des Strahlschutztunnels 21 ist derart bemessen, dass der Strahlschutztunnel 21 bei Funktionszustand von einem zu bearbeitenden Werkstück und auch von der Vorschubeinheit 11 in der Werkstück-Zuführrichtung 18 und in Gegenrichtung der Werkstück-Zuführrichtung 18 passiert werden kann. Eine Tunnelwand 22 des Strahlschutztunnels 21 ist mehrteilig ausgeführt.

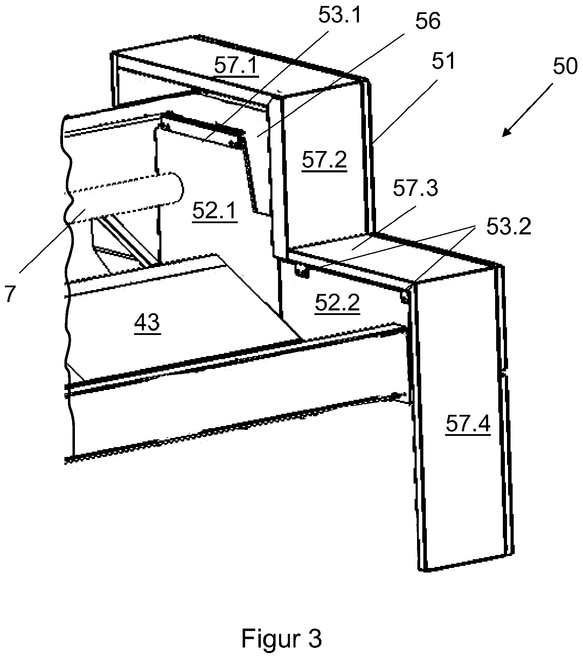

In Figur 2 ist ein Ausführungsbeispiel einer Ausschleusstation 40 einer erfindungsgemäßen Laserbearbeitungsmaschine 1 mit einem gegenüber der Figur 1 abgewandelten Entladebereich 4 gezeigt. Die Ausschleusstation 40 umfasst eine weitere Einhausung 41 und eine Teileablage 42 sowie eine Prallvorrichtung 50. Die Prallvorrichtung 50 ist besser zu erkennen in der Figur 3, die eine Detailansicht auf einen Teil der Ausschleusstation 40 und die Prallvorrichtung 50 bei entfernter weiterer Einhausung 41 der Ausschleusstation 40 zeigt.

Die Prallvorrichtung 50 weist ausweislich der Figur 3 ein Strahlschutzgehäuse 51 auf. Das Strahlschutzgehäuse 51 weist mehrere Strahlschutzplatten 57.1, 57.2, 57.3, 57.4 sowie eine Endseite 56 auf, die das Strahlschutzgehäuse 51 zusammen mit der weiteren Einhausung 41 strahldicht gegenüber Laserstrahlen aus dem Arbeitsraum 6 abschließen. Die Endseite 56 ist ebenfalls als ein Strahlschutzplatte ausgebildet. Vorliegend sind die Strahlschutzplatten 57.1, 57.2, 57.3, 57.4 und die Endseite 56 als Strahlschutzbleche ausgebildet.

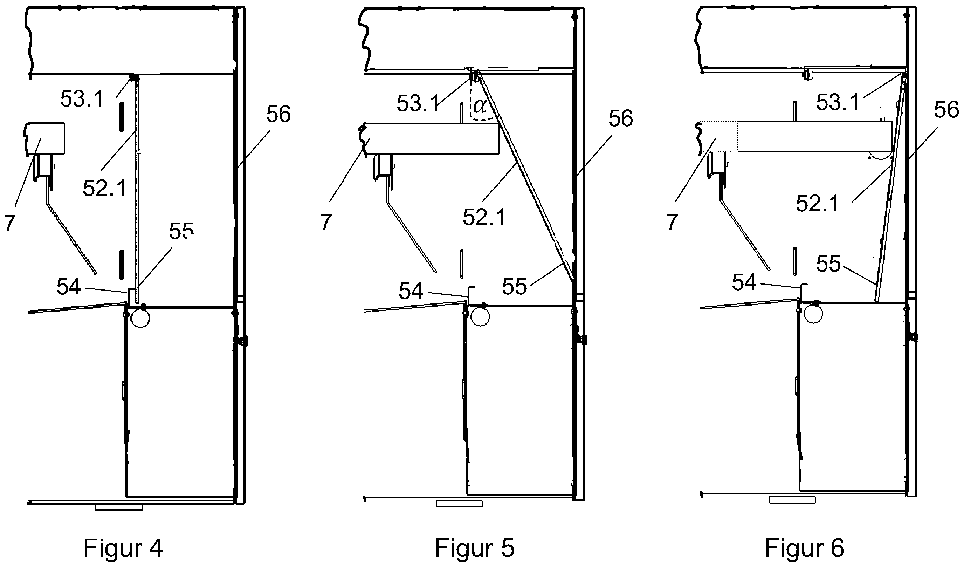

An dem Strahlschutzgehäuse 51 sind zwei Prallkörper 52.1, 52.2 in Ausschleusrichtung 19 nebeneinander angeordnet. Die Prallkörper 52.1, 52.2 sind vorliegend als Prallplatten, insbesondere Prallbleche, ausgebildet. Die Prallkörper 52.1, 52.2 sind dabei an ersten Haltepunkten 53.1, 53.2 mechanisch und/oder magnetisch befestigt. Dies ist besser zu erkennen in den Figuren 4, 5 und 6, die exemplarisch den Prallkörper 52.1 in der Prallvorrichtung 50 sowie seine Funktion zeigen und bezeichnen. Das im Folgenden zu dem Prallkörper 52.1 Gesagte gilt entsprechend für den Prallkörper 52.2.

Figur 4 zeigt eine erste Position des Prallkörpers 52.1. In dieser ersten Position liegt der Prallkörper 52.1 mit einem zweiten Bereich 55 an einem zweiten Haltepunkt 54 an. Der zweite Haltepunkt 54 ist vorliegend als ein Vorsprung ausgebildet, gegen den der Prallkörper 52.1 anliegt.

Wenn ein Werkstück 7 nicht in das gewünscht kleinere Werkstücke 7 zerlegt worden ist und in der Werkstück-Zuführrichtung 18 von der Vorschubeinheit 11 weiter vorgeschoben wird, prallt es auf den Prallkörper 52.1, wodurch der Prallkörper 52.1 in Richtung zu der Endseite 56 bewegt wird. Dies ist in Figur 5 gezeigt. Dort ist auch zu erkennen, dass der Prallkörpers 52.1 an dem ersten Haltepunkt 53.1 schwenkbar in Richtung zu der Endseite 56 gelagert ist. Entsprechend wird der Prallkörper 52.1 bei Aufprallen des Werkstücks 7 auf diesen um einen Schwenkwinkel α verschwenkt. Dabei löst sich der zweite Bereich 55 des Prallkörpers 52.1, der einem ersten Bereich des Prallkörpers 52.1, an dem der Prallkörper 52.1 mittels des ersten Haltepunkts 53.1 befestigt ist, gegenüberliegt, von dem zweiten Haltepunkt 54. Der zweite Bereich 55 trifft bei einem maximalen Schwenkwinkel α des Prallkörpers 52.1 auf die Endseite 56 auf. Die Endseite 56 kann sich dabei innerhalb des Strahlschutzgehäuses 51 befinden oder eine stirnseitige Abschlussplatte des Strahlschutzgehäuses 51 sein.

Bei Erreichen eines vorgegebenen Schwenkwinkels α kann ein (nicht gezeigter) Sicherheitsschalter einen Not-Halt der Laserbearbeitungsmaschine 1 auslösen, um eine mechanische Beschädigung des Strahlschutzgehäuses 51 bei weiterem Vorschub des Werkstücks 7 zu vermeiden. Der vorgegebene Schwenkwinkel α kann beispielsweise so vorgegeben sein, dass er bei Anschlagen des zweiten Bereichs 55 des Prallkörpers 52.1 an der Endseite 56 vorliegt.

Der zweite Haltepunkt 54 liegt in Gravitationsrichtung unterhalb des ersten Haltepunkts 53.1. Demnach wird der Prallkörper 52.1 mittels der Schwerkraft automatisch zurück zu an den zweiten Haltepunkt 54 angelegt bzw. zurückgestellt, wenn das auf den Prallkörper 52.1 aufgetroffene Werkstück 7 nach einem Not-Halt entfernt wurde.

Alternativ oder zusätzlich kann, wie in Figur 6 gezeigt, der erste Haltepunkt 53.1 in Werkstück-Zuführrichtung 18 verschiebbar oder lösbar ausgebildet sein, sobald der maximale Schwenkwinkel α erreicht ist, der Prallkörper 52.1 also auf die Endseite 56 auftrifft. Beispielsweise kann der erste Haltepunkt 53.1 in einer Schiene geführt sein oder aber abfallen. In diesem Falle kann das Werkstück 7 den Prallkörper 52.1 und den ersten Haltepunkt 53.1 zu der Endseite 56 verschieben, bis auch der erste Haltepunkt 53.1 an der Endseite 56 anliegt. Hier kann der Sicherheitsschalter den Not-Halt der Laserbearbeitungsmaschine 1 auslösen, wenn der erste Haltepunkt 53.1 einen vorgegebenen Abstand von der Endseite 56 überschreitet oder auf die Endseite 56 auftrifft. Ferner können insbesondere in dem Bereich zwischen der jeweiligen Prallplatte 52.1 und 52.2 sowie der jeweils zugehörigen Endseite 56 Sensoren vorhanden sein, um insbesondere ein in diesem Bereich eintretendes oder vorhandenes Werkstück 7 zu detektieren. Dadurch kann die Betriebssicherheit erhöht werden.

## Patentansprüche

1. Laserbearbeitungsmaschine (1) zum Bearbeiten von Werkstücken (7), wobei die Laserbearbeitungsmaschine (1) aufweist:
- einen Arbeitsraum (6) mit einer darin angeordneten Laserbearbeitungsvorrichtung zum Bearbeiten von Werkstücken (7) und
- einen Entladebereich (4) mit einer mit dem Arbeitsraum (6) verbundenen Ausschleusstation (40) zum Entladen von in dem Arbeitsraum (6) bearbeiteten Werkstücken (7),
**dadurch gekennzeichnet, dass**
der Entladebereich (4) eine Prallvorrichtung (50) aufweist, die der Ausschleusstation (40) in Werkstück-Zuführrichtung (18) nachgelagert ist, wobei die Prallvorrichtung (50) ein Strahlschutzgehäuse (51) mit einer Endseite (56) und zumindest einem in Werkstück-Zuführrichtung (18) der Endseite (56) vorgelagerten und von der Endseite (56) beabstandeten Prallkörper (52) aufweist, die derart eingerichtet sind, dass der zumindest eine Prallkörper (52) bei Aufprallen des in Werkstück-Zuführrichtung (18) geführten Werkstückes (7) auf den zumindest einen Prallkörper (52) geführt zu der Endseite (56) bewegt wird, und wobei die Prallvorrichtung (50) zumindest eine Positionserkennungseinheit aufweist, die dazu eingerichtet ist, die Position des zumindest einen Prallkörpers (52) gegenüber der Endseite (56) festzustellen.

2. Laserbearbeitungsmaschine (1) nach Anspruch 1, wobei die zumindest eine Positionserkennungseinheit als ein Sicherheitsschalter ausgebildet ist oder die Prallvorrichtung (50) zumindest einen mit der zumindest einen Positionserkennungseinheit verbundenen Sicherheitsschalter aufweist, und wobei der zumindest eine Sicherheitsschalter dazu eingerichtet ist, einen Not-Halt der Laserbearbeitungsmaschine (1) auszulösen, wenn eine vorgegebene Position des zumindest einen Prallkörpers (52) gegenüber der Endseite (56) festgestellt oder verlassen wird.

3. Laserbearbeitungsmaschine (1) nach Anspruch 1 oder 2, wobei der zumindest eine Prallkörper (52) an einem ersten Haltepunkt (53) der Prallvorrichtung (50) schwenkbar gelagert ist, so dass die geführte Bewegung des zumindest einen Prallkörpers (52) zumindest eine Schwenkbewegung ist.

4. Laserbearbeitungsmaschine (1) nach Anspruch 3, wobei die vorgegebene Position ein Schwenkwinkel (α) des zumindest einen Prallkörpers (52) ist.

5. Laserbearbeitungsmaschine (1) nach Anspruch 3 oder 4, wobei der erste Haltepunkt (53) in Werkstück-Zuführrichtung (18) verschiebbar oder lösbar geführt ist, so dass die Bewegung des zumindest einen Prallkörpers (52) zumindest auch eine Verschiebebewegung oder Lösebewegung ist.

6. Laserbearbeitungsmaschine (1) nach Anspruch 5, wobei der erste Haltepunkt (53) dazu eingerichtet ist, in Werkstück-Zuführrichtung (18) verschoben oder gelöst zu werden, wenn der zumindest eine Prallkörper (52) infolge der Schwenkbewegung gegen die Endseite (56) anschlägt.

7. Laserbearbeitungsmaschine (1) nach Anspruch 5 oder 6, wobei die vorgegebene Position ein Abstand des ersten Haltepunkts (53) von der Endseite (56) ist.

8. Laserbearbeitungsmaschine (1) nach einem der Ansprüche 3 bis 7, wobei der zumindest eine Prallkörper (52) an einem zweiten Haltepunkt (54) der Prallvorrichtung (50) anliegt, so dass die geführte Bewegung des zumindest einen Prallkörpers (52) zumindest eine Schwenkbewegung weg von dem zweiten Haltepunkt (54) ist.

9. Laserbearbeitungsmaschine (1) nach einem der Ansprüche 3 bis 8, wobei der zumindest eine Prallkörper (52) an dem ersten Haltepunkt (53) und/oder dem zweiten Haltepunkt (54) magnetisch und/oder mechanisch befestigt ist.

10. Laserbearbeitungsmaschine (1) nach einem der voranstehenden Ansprüche, wobei der zumindest eine Prallkörper (52) als eine Prallplatte, insbesondere als ein Prallblech, ausgebildet ist.

11. Laserbearbeitungsmaschine (1) nach einem der voranstehenden Ansprüche, wobei die Prallvorrichtung (50) zumindest zwei Prallkörper (52) aufweist.

12. Laserbearbeitungsmaschine (1) nach Anspruch 11, wobei die zumindest zwei Prallkörper (50) in Querrichtung zu der Werkstück-Zuführrichtung (18) nebeneinander angeordnet sind.

## Claims

1. A laser machine tool (1) for machining workpieces (7), the laser machine tool (1) comprising:
- a working space (6) having a laser machining device located therein for machining workpieces (7) and
- an unloading region (4) with a discharge station (40) which is connected to the working space (6), for unloading workpieces (7) from the working space (6),
**characterized in that**
the unloading region (4) comprises an impact device (50) which is arranged downstream of the discharge station (40) in the workpiece feed direction (18), wherein the impact device (50) has a radiation protection housing (51) comprising an end side (56) and at least one impact element (52) which is arranged upstream of the end side (56) in the workpiece feed direction (18) and which is spaced apart from the end side (56), the housing and the impact element being designed such that when the workpiece (7), which is guided in the workpiece feed direction (18), hits the at least one impact element (52), the at least one impact element (52) is moved towards the end side (56) in a guided manner, and wherein the impact device (50) has at least one position detection unit which is designed to determine the position of the at least one impact element (52) relative to the end side (56).

2. The laser machine tool (1) according to claim 1, wherein the at least one position detection unit is designed as a safety switch or the impact device (50) comprises at least one safety switch connected to the at least one position detection unit, and wherein the at least one safety switch is designed to trigger an emergency stop of the laser machine tool (1) if a predefined position of the at least one impact element (52) relative to the end side (56) is detected or if said position is left.

3. The laser machine tool (1) according to claim 1 or 2, wherein the at least one impact element (52) is pivotably mounted at a first stopping point (53) of the impact device (50) so that the guided movement of the at least one impact element (52) is at least a pivot movement.

4. The laser machine tool (1) according to claim 3, wherein the predefined position is a pivot angle (α) of the at least one impact element (52).

5. The laser machine tool (1) according to claim 3 or 4, wherein the first stopping point (53) is displaceably or detachably guided in the workpiece feed direction (18) so that the movement of the at least one impact element (52) is at least also a displacement movement or a detachment movement.

6. The laser machine tool (1) according to claim 5, wherein the first stopping point (53) is designed to be displaced or detached in the workpiece feed direction (18) when the at least one impact element (52) strikes the end side (56) as a result of the pivot motion.

7. The laser machine tool (1) according to claim 5 or 6, wherein the predefined position is a distance of the first stopping point (53) from the end side (56).

8. The laser machine tool (1) according to one of claims 3 to 7, wherein the at least one impact element (52) sits against a second stopping point (54) of the impact device (50) so that the guided movement of the at least one impact element (52) is at least a pivot movement away from the second stopping point (54).

9. The laser machine tool (1) according to one of claims 3 to 8, wherein the at least one impact element (52) is magnetically and/or mechanically fastened to the first stopping point (53) and/or the second stopping point (54).

10. The laser machine tool (1) according to one of the preceding claims, wherein the at least one impact element (52) is designed as an impact plate, in particular as a metal impact sheet.

11. The laser machine tool (1) according to one of the preceding claims, wherein the impact device (50) comprises at least two impact elements (52).

12. The laser machine tool (1) according to claim 11, wherein the at least two impact elements (50) are arranged next to one another in the lateral direction relative to the workpiece feed direction (18).

## Revendications

1. Machine d'usinage au laser (1) pour l'usinage de pièces à usiner (7), la machine d'usinage au laser (1) présentant :
- un espace de travail (6) avec un dispositif d'usinage au laser disposé dans celui-ci pour l'usinage de pièces à usiner (7) et
- une zone de déchargement (4) avec un poste d'évacuation (40) relié à l'espace de travail (6) pour le déchargement de pièces à usiner (7) usinées dans l'espace de travail (6),
**caractérisée en ce que**
la zone de déchargement (4) présente un dispositif d'impact (50) placé en aval du poste d'évacuation (40) dans la direction d'amenée des pièces à usiner (18), le dispositif d'impact (50) présentant un boîtier de protection contre le rayonnement (51) avec un côté d'extrémité (56) et au moins un corps d'impact (52) placé en amont du côté d'extrémité (56) dans la direction d'amenée des pièces à usiner (18) et espacé du côté d'extrémité (56), qui sont aménagés de telle sorte que ledit au moins un corps d'impact (52) est déplacé et guidé vers le côté d'extrémité (56) lors de l'impact de la pièce à usiner (7) guidée dans la direction d'amenée des pièces à usiner (18) sur ledit au moins un corps d'impact (52), et le dispositif d'impact (50) présentant au moins une unité de détection de position conçue pour déterminer la position dudit au moins un corps d'impact (52) par rapport au côté d'extrémité (56).

2. Machine d'usinage au laser (1) selon la revendication 1, ladite au moins une unité de détection de position étant conçue comme un interrupteur de sécurité ou le dispositif d'impact (50) présentant au moins un interrupteur de sécurité relié à ladite au moins une unité de détection de position, et ledit au moins un interrupteur de sécurité étant conçu pour déclencher un arrêt d'urgence de la machine d'usinage au laser (1) lorsqu'une position prédéterminée dudit au moins un corps d'impact (52) est constatée ou quittée par rapport au côté d'extrémité (56).

3. Machine d'usinage au laser (1) selon la revendication 1 ou 2, ledit au moins un corps d'impact (52) étant monté de manière à pouvoir pivoter sur un premier point de retenue (53) du dispositif d'impact (50), de sorte que le mouvement guidé dudit au moins un corps d'impact (52) est au moins un mouvement pivotant.

4. Machine d'usinage au laser (1) selon la revendication 3, la position prédéterminée étant un angle de pivotement (α) dudit au moins un corps d'impact (52).

5. Machine d'usinage au laser (1) selon la revendication 3 ou 4, le premier point de retenue (53) étant guidé de manière à pouvoir être déplacé ou détaché dans la direction d'amenée des pièces à usiner (18), de sorte que le mouvement dudit au moins un corps d'impact (52) est au moins également un mouvement de déplacement ou un mouvement de détachement.

6. Machine d'usinage au laser (1) selon la revendication 5, le premier point de retenue (53) étant aménagé pour être déplacé ou détaché dans la direction d'amenée des pièces à usiner (18) lorsque ledit au moins un corps d'impact (52) vient buter contre le côté d'extrémité (56) suite au mouvement de pivotement.

7. Machine d'usinage au laser (1) selon la revendication 5 ou 6, la position prédéterminée étant une distance entre le premier point de retenue (53) et le côté d'extrémité (56).

8. Machine d'usinage au laser (1) selon l'une des revendications 3 à 7, ledit au moins un corps d'impact (52) étant en appui contre un deuxième point de retenue (54) du dispositif d'impact (50), de sorte que le mouvement guidé dudit au moins un corps d'impact (52) est au moins un mouvement de pivotement s'éloignant dudit deuxième point de retenue (54).

9. Machine d'usinage au laser (1) selon l'une des revendications 3 à 8, ledit au moins un corps d'impact (52) étant fixé magnétiquement et/ou mécaniquement au premier point de retenue (53) et/ou au deuxième point de retenue (54).

10. Machine d'usinage au laser (1) selon l'une des revendications précédentes, ledit au moins un corps d'impact (52) étant conçu comme une plaque d'impact, en particulier comme une tôle d'impact.

11. Machine d'usinage au laser (1) selon l'une des revendications précédentes, le dispositif d'impact (50) présentant au moins deux corps d'impact (52).

12. Machine d'usinage au laser (1) selon la revendication 11, les au moins deux corps d'impact (50) étant disposés l'un à côté de l'autre dans la direction transversale à la direction d'amenée des pièces à usiner (18).
